# EUROPEAN PATENT SPECIFICATION

(11) **EP 1 608 810 B1**
(45) Date of publication and mention of the grant of the patent: **03.01.2007**
(21) Application number: 04723298.8
(22) Date of filing: 25.03.2004
(51) Int. Cl.: D21H 21/36, A01N 59/20

(54) **DISPOSABLE, PAPER-BASED HOSPITAL AND OPERATING THEATER PRODUCTS**
ZUM EINMALIGEN GEBRAUCH IN KRANKENHAUS UND OPERATIONSSAAL BESTIMMTE ERZEUGNISSE AUF BASIS VON PAPIER
PRODUITS EN PAPIER JETABLES POUR HOPITAUX ET SALLES D'OPERATION

(30) Priority: 01.04.2003 US 405408
(43) Date of publication of application: 28.12.2005
(73) Proprietor: The Cupron Corporation, New York, NY 10165-1606 (US)
(72) Inventor: GABBAY, Jeffrey, 14 Jabotinsky Street, 92142 Jerusalem (IL)
(74) Representative: Fairbairn, Angus Chisholm
(86) International application number: PCT/IL2004/000271
(87) International publication number: WO 2004/088029

(56) References cited:
- WO-A-01/28337
- WO-A-01/81671
- US-A- 1 947 451
- US-A- 5 458 906

## Description

The present invention relates to disposable, paper-based hospital and operating theater products for combating viral infections. More particularly, the present invention relates to disposable paper-based hospital scrubs, masks and similar paper-based hospital and operating theater products and to a method for the manufacture thereof wherein said paper-based products comprise a plurality of fibers coated with an anti-viral Cu⁺⁺ cationic, water insoluble form of copper.

Paper products having various forms of copper incorporated therein have been described in the patent literature and thus e.g. in US Patent 1,947,451 published in February 1934 there is described a paper sheet having fungicidal and bacteriacidal properties carrying a predetermined amount of copper orthophenyl phenate precipitate.

Similarly many patents from decades ago such as US Patents 1,747,232; 1,846,185; 1,946,952; 1,988,231; 2,749,256 and 3,713,963 disclose the incorporation of different forms of copper into paper however all of said patents as well as US Patent 1,947,451 teach the incorporation of soluble forms of copper for other purposes and do not teach or suggest the use of an anti-viral Cu⁺⁺ cationic, water insoluble form of copper or the use thereof for preparing disposable anti-viral hospital and operating theater paper-based products.

While the use of copper as a biocide in paper is not entirely new, the addition of a water insoluble cationic species in the form described in the present application for anti-viral use is new.

In both WO 98/06508 and WO 98/06509 there are taught various aspects of a textile with a full or partial metal or metal oxide plating directly and securely bonded to the fibers thereof, wherein metal and metal oxides, including copper, are bonded to said fibers.

More specifically, in WO 98/06509 there is provided a process comprising the steps of: (a) providing a metallized textile, the metallized textile comprising: (i) a textile including fibers selected from the group consisting of natural fibers, synthetic cellulosic fibers, regenerated fibers, acrylic fibers, polyolefin fibers, polyurethane fibers, vinyl fibers, and blends thereof, and (ii) a plating including materials selected from the group consisting of metals and metal oxides, the metallized textile characterized in that the plating is bonded directly to the fibers; and (b) incorporating the metallized textile in an article of manufacture.

In the context of said invention the term "textile" includes fibers, whether natural (for example, cotton, silk, wool, and linen) or synthetic yarns spun from those fibers, and woven, knit, and non-woven fabrics made of those yarns. The scope of said invention includes all natural fibers; and all synthetic fibers used in textile applications, including but not limited to synthetic cellulosic fibers (i.e., regenerated cellulose fibers such as rayon, and cellulose derivative fibers such as acetate fibers), regenerated protein fibers, acrylic fibers, polyolefin fibers, polyurethane fibers, and vinyl fibers, but excluding nylon and polyester fibers, and blends thereof.

Said invention comprised application to the products of an adaptation of technology used in the electrolyses plating of plastics, particularly printed circuit boards made of plastic, with metals. See, for example, Encyclopedia of Polymer Science and Engineering (Jacqueline I. Kroschwitz, editor), Wiley and Sons, 1987, vol. IX, pp 580-598. As applied to textiles, this process included two steps. The first step was the activation of the textile by precipitating catalytic noble metal nucleation sites on the textile. This was done by first soaking the textile in a solution of a low-oxidation-state reductant cation, and then soaking the textile in a solution of noble metal cations, preferably a solution of Pd⁺⁺ cations, most preferably an acidic PdCl₂ solution. The low-oxidation-state cation reduces the noble metal cations to the noble metals themselves, while being oxidized to a higher oxidation state. Preferably, the reductant cation is one that is soluble in both the initial low oxidation state and the final high oxidation state, for example Sn⁺⁺, which is oxidized to Sn⁺⁺⁺⁺, or Ti⁺⁺⁺, which is oxidized to Ti⁺⁺⁺⁺.

The second step was the reduction, in close proximity to the activated textile, of a metal cation whose reduction was catalyzed by a noble metal. The reducing agents used to reduce the cations typically were molecular species, for example, formaldehyde in the case of Cu⁺⁺. Because the reducing agents were oxidized, the metal cations are termed "oxidant cations" herein. The metallized textiles thus produced were characterized in that their metal plating was bonded directly to the textile fibers.

In WO 98/06508 there is described and claimed a composition of matter comprising:
(a) a textile including fibers selected from the group consisting of natural fibers, synthetic cellulosic fibers, regenerated protein fibers, acrylic fibers, polyolefin fibers, polyurethane fibers, vinyl fibers, and blends thereof; and
(b) a plating including materials selected from the group consisting of metals and metal oxides;
the composition of matter characterized in that said plating is bonded directly to said fibers.

Said publication also claims a composition of matter comprising:
(a) a textile including fibers selected from the group consisting of natural fibers, synthetic cellulosic fibers, regenerated protein fibers, acrylic fibers, polyolefin fibers, polyurethane fibers, vinyl fibers, and blends thereof; and
(b) a plurality of nucleation sites, each of said nucleation sites including at least one noble metal;
the composition of matter characterized by catalyzing the reduction of at least one metallic cationic species to a reduced metal, thereby plating said fibers with said reduced metal.

In addition, said publication teaches and claims processes for producing said products.

A preferred process for preparing a metallized textile according to said publication comprises the steps of:
a) selecting a textile, in a form selected from the group consisting of yarn and fabric, said textile including fibers selected from the group consisting of natural fibers, synthetic cellulosic fibers, regenerated protein fibers, acrylic fibers, polyolefin fibers, polyurethane fibers, vinyl fibers, and blends thereof;
b) soaking said textile in a solution containing at least one reductant cationic species having at least two positive oxidation states, said at least one cationic species being in a lower of said at least two positive oxidation states;
c) soaking said textile in a solution containing at least one noble metal cationic species, thereby producing an activated textile; and
d) reducing at least one oxidant cationic species in a medium in contact with said activated textile, thereby producing a metallized textile.

While the metallized fabrics produced according to said publications are effective acaricides, it was found that they are also effective in preventing and/or treating bacterial, fungal and yeast infections which afflict various parts of the human body and that therefore the incorporation of at least a panel of a metallized textile material in an article of clothing can have extremely beneficial effect.

Thus, in US Patent 6,124,221 there is described and claimed an article of clothing having antibacterial, antifungal, and antiyeast properties, comprising at least a panel of a metallized textile, the textile including fibers selected from the group consisting of natural fibers, synthetic cellulosic fibers, regenerated protein fibers, acrylic fibers, polyolefin fibers, polyurethane fibers, vinyl fibers, and blends thereof, and having a plating including an antibacterial, antifungal and antiyeast effective amount of at least one oxidant cationic species of copper.

In said specification there was described that said article of clothing was effective against *Tinea Pedis,* against *Candida Albicans,* against *Thrush* and against bacteria causing foot odor, selected from the group consisting of *brevubacterium, acinetobacter, micrococcus* and combinations thereof.

Thus, said invention was especially designed for preparation of articles such as underwear and articles of hosiery.

In WO 01/81671 there is described that textile fabrics incorporating fibers coated with a cationic form of copper are also effective for the inactivation of antibiotic resistant strains of bacteria and said cationic species of copper preferably comprises Cu⁺⁺ ions.

It is to be noted that normal paper mulch is usually in an alkaline state with a pH which can vary from 8 to 11. While this atmosphere allows a reduction of copper to a cationic state to occur in an oxidation reduction process, the elements and the pH of the mulch will inhibit a full chemical reaction. The reduction process will upset the malleability of the mulch and the inhibition of the full reaction will in turn cause a limit to the anti-viral quality of the mulch.

In order to have an effective level of anti-viral activity and in order not to upset the proper production of paper, it was found according to the present invention that a fiber prepared with a plating of a cationic species of copper on it could be added to the mulch in the final stages of production without disturbing the production or anti-viral qualities of the mulch. Since the copper on the fiber does not react to an alkaline solution or atmosphere, it was found that the full anti-viral qualities were retained.

Thus, none of the above publications teach or suggest the subject matter of the present invention.

Furthermore as will be noted hereinafter in the production of paper acrylic glue is added to act as a binder for the paper and there was the possibility that the acrylic binder would encapsulate the copper compound and prevent the copper ions from being effective as an anti-viral agent. Surprisingly this was found not to be the case and for this reason also the paper-based hospital and operating theater products of the present invention and their ability to prevent viral infection is unexpected and neither taught or suggested by the prior art.

Thus according to the present invention there is now provided disposable, paper-based hospital and operating theater products for combating viral infections, said paper products incorporating fibers coated with a Cu⁺⁺ cationic water-insoluble form of copper wherein said coated fibers are disposed in said products as randomly scattered fibers in a paper layer and wherein said paper product is effective for the inactivation of viruses in fluids brought in contact therewith.

In preferred embodiments of the present invention said products are selected from the group consisting of disposable scrubs, barriers, clothing, masks and caps.

It is understood that the term paper-based products as used herein is intended to note products made form any source of paper as recognized in the art.

The invention also provides a method for combating viral infections in hospitals and operating theaters comprising providing disposable, paper-based hospital and operating theater products, said paper products incorporating fibers coated with a Cu⁺⁺ cationic water-insoluble form of copper, wherein said coated fibers are disposed in said products as randomly scattered fibers in a paper layer and wherein said paper product is effective for the inactivation of viruses in fluids brought in contact therewith.

While the invention will now be described in connection with certain preferred embodiments in the following examples and with reference to the attached figures, so that aspects thereof may be more fully understood and appreciated, it is not intended to limit the invention to these particular embodiments. On the contrary, it is intended to cover all alternatives, modifications and equivalents as may be included within the scope of the invention as defined by the appended claims. Thus, the following examples which include preferred embodiments will serve to illustrate the practice of this invention, it being understood that the particulars shown are by way of example and for purposes of illustrative discussion of preferred embodiments of the present invention only and are presented in the cause of providing what is believed to be the most useful and readily understood description of formulation procedures as well as of the principles and conceptual aspects of the invention.

### Example 1

### a) Preparation of the fibers

i) Fibers were exposed to a tin dichloride solution and then rinsed in plain water.
ii) Fibers were exposed to a palladium solution and then rinsed in plain water.
iii) Fibers were exposed to a copper sulfate chelating solution.
iv) Fibers were exposed to a reducing agent; and
v) Fibers were allowed to dwell for no less than 2 minutes or until all fibers were plated by a dark brown form of copper.

### b) Preparation of a paper incorporating said fibers

50 grams (dry weight) of a soft fibrous carton was prepared by chopping it into small pieces. The cut carton was placed in a soapy solution and heated to about 80°C and allowed to remain at that state for about 15 minutes to facilitate removal of any binders in the slurry.

The slurry was then rinsed with cold water and strained to remove excess liquid. The slurry was then placed in blender with a small amount of water and allowed to mix until a very fine slurry was obtained. The moist fine slurry was then divided into small batches by weight each weighing about 90 grams after removal of excess liquid. 5 grams of finely chopped Cu coated cellulose fibers were added to each batch and allowed to mix in a blender. When a fine slurry of each was obtained in its own blender, 5 grams of an acrylic glue was added to each to act as a binder for the paper.

A small amount of each slurry was placed between layers of absorbent paper and run through a squeeze roll at about 8 bars of pressure. This proved to be enough pressure to remove almost all the liquid in the slurry and still leave a flat paper. The paper was then dried using a hot air dryer. The paper was then perforated with a punch containing 500 micron needles spaced every % mm, cut to the size of an encasement which was 47 mm in diameter to form a circular cartridge, and layered within the plastic encasement. Other sheets of perforated paper were placed into syringes as described in Example 2 hereinafter. The perforations were enough to allow an unimpeded flow of water through the paper layer which was about ½ cm thick.

It is to be noted that a flow-through test as described in Example 2 hereinafter was designed for testing the antiviral properties of paper products incorporating fibers coated with a Cu⁺⁺ cationic water-insoluble form of copper since a method could not be devised to reflect true results of the antiviral effect of a paper product according to the present invention involving simply placing a liquid containing viruses on a paper product according to the present invention.

### Example 2

Paper filters impregnated with copper ions and placed into encasements in the manner described in Example 1 were submitted by Dr. Gadi Borkow of the Ruth Ben-Ari Institute of Clinical Immunology and Hebrew University, Rehovot, Israel, for evaluation of their suitability in eliminating virus from filterable solutions. Two types of filters were submitted, those in syringes, and those in circular cartridges. The cartridge filters were designed to handle larger volumes of liquid.

### MATERIALS AND METHODS

*Viruses*: Influenza A/Panama/2007/99 was from the Centers for Disease Control and Prevention (Atlanta, GA). The following viruses were acquired from the American Type Culture Collection (ATCC) (Manassas, VA): Venezuelan equine encephalitis (VEE) virus (Trinidad strain), Vaccinia virus (WR strain), and yellow fever virus (17D strain). The influenza virus was propagated in Madin Darby canine kidney (MDCK) cells, whereas the other viruses were passaged in African green monkey kidney (Vero) cells. The cells were obtained from ATCC.

*Virus Titration Assay:* Except for vaccinia virus, the cytopathic effect assay was used to titrate surviving virus in the filtrate and the titer was calculated using the Reed-Muench end point dilution method (1). Virus titers for vaccinia virus were determined by plaque assay.

*Filter treatment:* Clarified viral lysate supernatant fluids (600 x g, 5 min) were diluted 1:10 in MEM without serum. Two milliliters of each viral lysate was passed through an appropriate syringe filter by applying moderate pressure to the syringe plunger. The filtrate was collected in the sterile tubes and the surviving virus assayed as described above. Two filters were used for each virus, one treated with copper and one not treated with copper. An unfiltered sample from each original clarified lysate was also tittered in parallel. The larger filters had 10 ml of diluted (1:20) medium passed through them. These filters were numbered; the filter number used for each virus is indicated in the table.

### CONCLUSIONS

The copper-treated filters reduced virus loads from filtered solutions, depending upon the virus. Influenza A virus was the most affected by treatments, followed by yellow fever, VEE, and vaccinia viruses, respectively.

### REFERENCE

1. Reed, L.J. and Muench, M. 1938. A simple method of estimating fifty percent end points. Am. J. Hyg. 27:493-498.

**TABLE 1. The effects of copper-treated membranes in syringe filters on vaccinia and VEE virus-infected solutions.**

| | **VIRUS TITER^{a}** | | | **VIRUS TITER^{a}** |
|---|---|---|---|---|
| **VIRUS** | **Cu⁺⁺ Syringe Filter** | **Untreated Filter** | **Log₁₀ Virus Reduction** | **Unfiltered Clarified Lysate** |
| **VACCINIA** | 7.4 | 7.4 | 0 | 7.4 |
| **VEE** | 5.3 | 6.7 | 1.4 | 6.7 |

| | | | | |
|---|---|---|---|---|
| ^{a} Log₁₀PFU/ml for vaccinia virus, or Log₁₀CCID50/ml for VEE virus. | | | | |

**TABLE 2. The effects of copper-treated membranes in larger capacity cartridge filters on influenza, vaccinia, and yellow fever virus-infected solutions.**

| | | | | **VIRUS TITER^{a}** |
|---|---|---|---|---|
| **VIRUS** | **Cartridge Filter no.** | **Virus Titer^{a}** | **Log₁₀ Virus Reduction** | **Unfiltered Clarified Lysate** |
| **INFLUENZA A** | 2 | 6.7 | 0.8 | 7.5 |
| **INFLUENZA A** | 6 | 5.0 | 2.5 | 7.5 |
| **VACCINIA** | 1 | 7.1 | 0.5 | 7.6 |
| **VACCINIA** | 4 | 6.7 | 0.9 | 7.6 |
| **YELLOW FEVER** | 1 | 5.7 | 0.6 | 6.3 |
| **YELLOW FEVER** | 4 | 4.7 | 1.6 | 6.3 |

| | | | | |
|---|---|---|---|---|
| ^{a} Log₁₀PFU/ml for vaccinia virus, or Log₁₀CCID50/ml for the other two virus. | | | | |

As will be seen from the above Tables, paper products impregnated with copper ions according to the present invention are effective in reducing virus loads and therefore are effective for the inactivation of viruses in fluids brought in contact therewith, thereby reducing the risk of infection of hospital and other personnell wearing garments produced from paper products according to the present invention.

### Example 3

Following the procedure for the preparation of fibers and the preparation of a paper incorporating said fibers as set forth in Example 1, paper-based hospital and operating theater products including disposable gowns, coats, scrubs, barriers, clothing, masks and caps are produced by methods known per se by incorporating the fibers coated with a Cu⁺⁺ cationic water-insoluble form of copper into the standard manufacturing process for said paper products.

It will be evident to those skilled in the art that the invention is not limited to the details of the foregoing illustrative examples and that the present invention may be embodied in other specific forms without departing from the essential attributes thereof, and it is therefore desired that the present embodiments and examples be considered in all respects as illustrative and not restrictive, reference being made to the appended claims, rather than to the foregoing description, and all changes which come within the meaning and range of equivalency of the claims are therefore intended to be embraced therein.

## Claims

1. Disposable, paper-based hospital and operating theater products for combating viral infections, said paper products incorporating fibers coated with a Cu⁺⁺ cationic water-insoluble form of copper, wherein said coated fibers are disposed in said products as randomly scattered fibers in a paper layer and wherein said paper product is effective for the inactivation of viruses in fluids brought in contact therewith.

2. Disposable, paper-based hospital and operating theater products according to claim 1 wherein said products are selected from the group consisting of disposable scrubs, barriers, clothing, masks and caps.

3. A method for combating viral infections in hospitals and operating theaters comprising providing disposable, paper-based hospital and operating theater products, said paper products incorporating fibers coated with a Cu⁺⁺ cationic water-insoluble form of copper, wherein said coated fibers are disposed in said products as randomly scattered fibers in a paper layer and wherein said paper product is effective for the inactivation of viruses in fluids brought in contact therewith.

## Patentansprüche

1. Zum einmaligen Gebrauch im Krankenhaus und Operationssaal bestimmte Erzeugnisse auf der Basis von Papier zum Bekämpfen von Virusinfektionen, wobei in das Papiererzeugnis Fasern eingearbeitet sind, die mit einer kationischen, wasserunlöslichen Cu⁺⁺-Form von Kupfer beschichtet sind, wobei die beschichteten Fasern in den Erzeugnissen als willkürlich verstreute Fasern in einer Papierschicht vorliegen und wobei das Papiererzeugnis zur Inaktivierung von Viren in Fluiden wirksam ist, die damit in Kontakt gebracht werden.

2. Zum einmaligen Gebrauch im Krankenhaus und Operationssaal bestimmte Erzeugnisse auf der Basis von Papier nach Anspruch 1, wobei die Erzeugnisse aus der Gruppe ausgewählt sind bestehend aus OP-Kleidung, Schutzkleidung, Kleidungsstücken, Masken und Kappen für den einmaligen Gebrauch.

3. Verfahren zum Bekämpfen von Virusinfektionen in Krankenhäusern und Operationssälen umfassend das Bereitstellen von zum einmaligen Gebrauch im Krankenhaus und Operationssaal bestimmten Erzeugnissen auf der Basis von Papier, wobei in das Papiererzeugnis Fasern eingearbeitet sind, die mit einer kationischen, wasserunlöslichen Cu⁺⁺-Form von Kupfer beschichtet sind, wobei die beschichteten Fasern in den Erzeugnissen als willkürlich verstreute Fasern in einer Papierschicht vorliegen und wobei das Papiererzeugnis zur Inaktivierung von Viren in Fluiden wirksam ist, die damit in Kontakt gebracht werden.

## Revendications

1. Produits à base de papier jetables pour hôpitaux et salles d'opération permettant de combattre les infections virales, lesdits produits de papier incorporant des fibres revêtues avec une forme de cuivre insoluble dans l'eau cationique Cu⁺⁺, où lesdites fibres revêtues sont disposées dans lesdits produits comme des fibres dispersées de façon aléatoire dans une couche de papier et où ledit produit de papier est efficace pour l'inactivation de virus dans des fluides amenés en contact avec celui-ci.

2. Produits à base de papier jetables pour hôpitaux et salles d'opération suivant la revendication 1, où lesdits produits sont choisis dans le groupe constitué de tenues de chirurgie, de protection, de vêtements, de masques et de bonnets jetables.

3. Procédé pour combattre les infections virales dans les hôpitaux et les salles d'opération comprenant la fourniture de produits à base de papier jetables pour hôpitaux et salles d'opération, lesdits produits de papier incorporant des fibres revêtues avec une forme de cuivre insoluble dans l'eau cationique Cu⁺⁺, où lesdites fibres revêtues sont disposées dans lesdits produits comme des fibres dispersées de façon aléatoire dans une couche de papier et où ledit produit de papier est efficace pour l'inactivation de virus dans des fluides amenés en contact avec celui-ci.
